Europäisches Patentamt

European Patent Office

Office européen des brevets

(11) Publication number: **0 200 484 B1**

# EUROPEAN PATENT SPECIFICATION

(45) Date of publication of patent specification: **05.02.92**  (51) Int. Cl.⁵: **C04B 35/00**, H01B 3/12, H01G 4/12

(21) Application number: **86303116.7**

(22) Date of filing: **24.04.86**

(54) **Ultralow fire ceramic composition.**

(30) Priority: **25.04.85 US 727292**

(43) Date of publication of application:
**05.11.86 Bulletin 86/45**

(45) Publication of the grant of the patent:
**05.02.92 Bulletin 92/06**

(84) Designated Contracting States:
**AT BE CH DE FR GB IT LI LU NL SE**

(56) References cited:

**FERROELECTRICS, vol. 54, no. 1-4, 1984, Gordon and Breach Science Publishers, New York/London/Paris/Montreaux/Tokyo M. LEJEUNE et al. "Ceramics of Perovskite Lead Magnesium Niobate" pages 191-194**

**MATERIALS RESEARCH BULLETIN, vol. 20, no. 5, May 1985, Pergamon Press, New York/Oxford/Toronto/Paris/Frankfurt/Sydney/Tokyo M. LEJEUNE et al. "Low firing dielectrics based on lead magnesium niobate" pages 493-499**

(73) Proprietor: **TAM CERAMICS INC.**
**4511 Hyde Park Boulevard**
**Niagara Falls, NY 14305(US)**

(72) Inventor: **Chu, Mike S. H.**
**714 Scovell Drive**
**Lewiston New York 14092(US)**
Inventor: **Hodgkins, Charles E.**
**456 Barton Drive**
**Lewiston New York 14092(US)**

(74) Representative: **Crisp, David Norman et al**
**D. YOUNG & CO. 10 Staple Inn**
**London, WC1V 7RD(GB)**

EP 0 200 484 B1

Rank Xerox (UK) Business Services

**Description**

This invention relates to ceramic dielectric compositions; preferably such compositions have high dielectric constants (K), e.g., above 12,000; low dissipation factors (DF), e.g., below 3%; high insulation resistance (R) capacitance (C) product (RC), e.g. above 20,000 at 25°C, above 2000 at 85°C; and ultra low sintering temperatures, e.g. below 1000°C; and may be sintered without external atmosphere control.

The most common material for manufacturing multilayer ceramic capacitors, hereinafter called MLC's, are $BaTiO_3$, $SrTiO_3$ with added modifiers, such as $SrZrO_3$, $CaZrO_3$, $BaZrO_3$, $CaTiO_3$, etc. These materials have dielectric constants up to about 11,000. However, these materials must be fired at temperatures above 1250°C. Such high firing temperatures necessitate the use of expensive noble metals, such as Pt, Pd, Au or their alloys which have high melting points as the internal electrode material to avoid vaporization or other loss of electrode material during the firing process. With the ever increasing cost of the noble metals, the manufacturing cost of high capacitance MLC's, which employ many internal electrode layers would be prohibitive.

One prior art approach, to lowering the firing temperatures of common ceramic compositions, useful for firing dielectric layers in MLC's, involves the use of fluxes, such as PbO; $Bi_2O_3$; ZnO; $B_2O_3$; $Al_2O_3$; and $SiO_2$. With this approach firing temperatures below 1150°C, have been achieved so that less expensive electrode materials such as 70% Ag/30% Pd can be employed. However, these compositions have been found to have dielectric constants less than 6500 because the fluxes usually add a low dielectric constant phase to the ceramic dielectric system.

Another prior art approach involves firing ceramic compositions in a reducing atmosphere such as $CO/CO_2$ mixture so that less expensive base metal electrodes, such as Ni, can be used in MLC's. However, the dielectric constants of these compositions are also low, e.g., less than 6000. Also the ceramic composition and the firing conditions, such as temperature/atmosphere, must be controlled rigidly to prevent both the reduction of the ceramic oxides or the oxidation of the electrode metals.

In yet another prior art approach, ceramic compositions such as those discussed above are first fired without electrodes in a highly reducing atmosphere, such as a $N_2/H_2$ mixture, to promote semiconduction and large grain growth, e.g. to above 20 um, in the ceramic. The large semiconducting grains are then insulated by diffusion insulating oxides such as PbO; $Bi_2O_3$; $B_2O_3$ in a second air firing process. These compositions normally have very high dielectric constants, above 20,000. However, these compositions are mainly designed for manufacturing of ceramic disc or tubular capacitors useful with low working voltages. The use of these ceramic compositions in MLC's is not practical because the large grain size requires that each dielectric layer be at least 60 um thick to sustain the required working voltages. The advantage of the high dielectric constant is lost by this thickness limitation because with the current state of the art in MLC manufacturing, much smaller and better capacitors can be manufactured to achieve the same objective with dielectric materials having lower K, for example 6,000, but with thinner dielectric thickness, for example at 20 um.

In another prior art approach, lead perovskite compounds, commonly known as relaxator compounds, such as $Pb(Fe_{1/2}Nb_{1/2})O_3$, $Pb(Fe_{2/3}W_{1/3})O_3$ have been used to prepare ceramic compositions having dielectric constants above 15,000. However, these compositions, when applied to MLC, have one or several of the following deficiencies.

(a) The dissipation factor is usually high.

(b) The insulation resistance is low especially at higher temperatures.

(c) The sintering temperature is not significantly lower than 1150°C.

(d) The composition often requires more than one lead perovskite compound and/or multiple dopant compounds and therefore are complicated and costly to manufacture.

(e) The composition requires sintering in a tightly controlled lead vapor pressure in order to maintain its stoichiometry. The manufacturing cost is therefore high.

Summary of the Invention

According to one aspect thereof, the present invention is directed to an ultra low temperature fired dielectric ceramic composition formed from two components, i.e., a major component comprising a base ceramic preparation, and a minor component comprising an oxide flux or sintering aid. More specifically, in forming the dielectric ceramic composition of the invention, the major component comprises from 95.0 to 81.5 percent by weight of the dielectric ceramic composition while the minor component comprises from 5.0 to 18.5 percent by weight of the composition.

According to one aspect of the present invention there is provided ultra temperature sinterable composition, comprising:

81.5 - 95 wt% of a base ceramic comprising $Pb(Mg_{1/3}Nb_{2/3})O_3$ formed from a composition comprising $MgNb_2O_6$, lead oxide and lead titanate (or precursors thereof) and 5 - 18.5 wt% lead oxide.

According to another aspect of the present invention there is provided a composition having a sintering temperature below 1000°C, for making ceramics having a dielectric constant above 12,000 at 1KHz, 1VRMS, a dissipation factor below 3%, an insulation capacitance product above 20,000 at 25°C and above 2,000 at 85°C, the composition comprising the composition according to the first aspect of the present invention.

According to a further aspect of the present invention there is provided a method for making a ceramic composition having a sintering temperature below 1000°C, a dielectric constant above 12,000 at 1KHz, 1VRMS, a dissipation factor below 3%, an insulation capacitance product above about 20,000 at 25°C and above about 2000 at 85°C, the method comprising the steps of:

mixing 81.5 - 95 wt % of a base ceramic comprising $Pb(Mg_{1/3}Nb_{2/3})O_3$ formed from a composition comprising $MgNb_2O_6$ lead oxide and lead titanate (or precursors thereof) with 5 - 18.5 wt% of lead oxide;

According to a further aspect of the present invention there is provided a method for making ceramic capacitors comprising:

a) forming a plurality of dielectric layers by mixing 81.5 - 95 wt% of a base ceramic comprising Pb-$(Mg_{1/3}Nb_{2/3})O_3$ formed from a composition comprising $MgNb_2O_6$, lead oxide and lead titanate (or precursors thereof) and 5 - 18.5 wt% lead oxide;

b) compressing the mixture and firing it at a temperature less than about 1000°C; and

c) forming electrodes between the dielectric layers.

According to yet another aspect of the present invention there is provided a multilayer capacitor produced according to the method of the present invention.

Preferably the $MgNb_2O_6$ is formed from magnesium oxide and niobium pentoxide or their constituent oxides or oxide precursors.

Preferably the major component of the ceramic composition is a base ceramic preparation of ceramic oxides and further comprises metallic silver (Ag), or its constituent oxide or oxide precursor. Preferably, compositional ranges of the components of the base ceramic preparation, expressed as the oxides, are lead oxide from 65.0 to 71.6 weight percent, magnesium oxide from 4.2 to 4.9 weight percent, niobium pentoxide from 25.5 to 27.0 weight percent, lead titanate up to 4.5 weight percent, and silver from 0 to 1 weight percent.

The minor component of the ceramic composition is a ceramic oxide flux or sintering aid comprising lead oxide. The weight ratio of lead oxide flux to the base ceramic preparation is from 0.05 to 0.185.

The ceramic compositions of this invention when formed into multilayer capacitors have dielectric constants which are typically above 12,000 at 1KHz, 1VRMS, dissipation factors which are typically below 3 percent at 1 VRMS, and insulation resistance - capacitance product which are typically greater than 40,000 at 25°C, 100 VDC/mil, greater than 2000 at 85°C and greater than 200 at 125°C. The capacitors may be formed by firing at ultra low temperatures, i.e., less than about 1000°C and preferably between 900°C and 950°C.

In an especially preferred embodiment, the ceramic dielectric composition is formed from a mixture of 88 weight percent of a base ceramic preparation comprising 65.56 weight percent PbO, 4.62 weight percent MgO, 25.36 weight percent $Nb_2O_5$ and 4.46 weight percent $PbTiO_3$; and 12 weight percent of an oxide flux or sintering aid which is essentially PbO.

Because of their high dielectric constants and low dissipation factors and their high dielectric insulation resistance, the ceramic compositions of this invention are suitable for manufacturing MLC's, having high capacitance and small physical sizes. Because of their ultra low sintering temperatures, the ceramic compositions of this invention are suitable for manufacturing MLC's utilizing metal internal electrodes of the lower melting point metals and their alloys, such as 100% Ag. The lower melting point metals are significantly cheaper than the noble metals commonly used for such electrodes. Because the ceramic composition of this invention are sinterable in air without external atmosphere control they are suitable for manufacturing MLC's with simple kiln equipment.

In addition to the above advantages, the ceramic compositions of this invention enable the manufacturing of high performance, high volume efficiency MLC's with simplified manufacturing processes and lower manufacturing costs.

As hereinafter described in detail, the present invention provides a ceramic composition with a dielectric constant greater than 12,000 at 25°C and a dissipation factor less than 3%, particularly such a ceramic composition which can be sintered at temperatures below 1000°C so that it can be cofired with silver-palladium alloy, with a silver content of more than 70 weight percent, for manufacturing multilayer ceramic capacitors, and which can be sintered in an open air atmosphere without establishing a saturated lead atmosphere (which further reduces the cost of manufacturing multilayer ceramic capacitors).

Various preferred features and embodiments of the invention will now be described by way of non-limiting example.

Detailed description of preferred embodiments

As set forth below, the dielectric ceramic composition of the present invention has several advantages which result in substantial cost savings without sacrificing desirable physical and electrical properties.

The present invention provides a novel dielectric ceramic composition having a dielectric constant higher than 12,000 which can be prepared by firing the component oxides or precursors thereof at a temperature not exceeding 1000°C. This composition differs substantially from those disclosed in the prior art in which desirable dielectric properties, such as a higher dielectric constant, are sacrificed in order to obtain materials which can be prepared at such lower temperatures. Since the prior art materials had dielectric constants which were too low to be of practical use in multilayer capacitors, it has previously been necessary to use materials which were fired at temperatures above 1100°C. At such high temperatures, the use of electrodes containing a high percentage of noble metals such as palladium or platinum is necessary. The lower firing temperature of the ceramic composition of the invention permits the use of lower melting metals such as silver-palladium electrodes which have more than 70 percent silver and less than 30 percent palladium content as the conducting layers in multilayer capacitors. This is very advantageous because palladium, a precious metal, is considerably more expensive than silver. Thus, the use of the ceramic composition of this invention in multilayer capacitors with lower cost electrode metals results in considerable cost savings.

The present invention also provides a novel dielectric ceramic composition with dielectric constant higher than 12,000 which can be prepared by firing the component oxides or precursors thereof at a temperature not exceeding 1000°C in open air atmosphere. This composition differs substantially from those disclosed in the prior art in which desirable dielectric properties such as a higher dielectric constant can only be achieved by combining several complexed ceramic precursor compositions and sintering in a closely controlled atmosphere. Such practices significantly increase the manufacturing cost of the multilayer ceramic capacitors.

A fired ceramic body of the present invention is produced by reacting during the course of firing the constituent dielectric oxides of the base ceramic preparation, including lead oxide, magnesium oxide, lead titanate, and niobium pentoxide with or without a small amount of metallic silver and an oxide flux which comprises lead oxide.

In preparing the base ceramic preparation used in this invention, magnesium oxide and niobium pentoxide in the proportions set forth above may be slurried together in water. After drying, the mixture may be pulverized and calcined to form magnesium niobate. The magnesium niobate, lead titanate and lead oxide in the proportions set forth above may again be slurried together in water. After drying the mixture may be pulverized and calcined again to form the base ceramic composition $Pb(Mg_{1/3}Nb_{2/3})O_3$. The base ceramic composition may then be blended, slurried, and milled to the desired particle size, with lead oxide flux. The combined mixture of the base ceramic preparation and the oxide flux may be cast into a sheet using standard methods, and formed into a multilayer capacitor structure with internal electrodes having more than 70 percent silver and less than 30 percent palladium, and fired at about 900°C to 1000°C for about 3 hours.

The ultra low temperature-fired dielectric composition of this invention has an insulation resistance-capacitance product (RC) greater than 40,000 ohm-farads at 25°C and 100 VDC/mil, and greater than 2000 ohm-farads at 85°C and 100 VDC/mil, and greater than 100 ohm-farads at 125°C and 100 VDC/mil. The dielectric constant is typically about 14,000 ∓ 2000 at 1 kHz and 1 volt rms, and the dissipation factor is typically less than 3.0 percent at 1 KHz and 1 volt rms.

The invention will be further illustrated by the following examples, but the invention is not intended to be limited thereto. In particular, Examples 21 and 22 illustrate compositions in accordance with the present invention and the other examples illustrate various aspects of the present invention. The values given for the examples herein are subject to variations based on factors known in the art. For example, with respect to Examples 1-26 herein, the dielectric constant may be significantly increased and the dissipation factor may be significantly decreased by pulverizing, milling, uniformly dispersing, or otherwise reducing the starting materials to very fine particles. Such practices, which are commonly carried out in the course of manufacturing ceramic capacitors, were not employed to their full extent in the preparation of Examples 1-26. In addition, variations in firing conditions, sample thickness and preparation, and measurement error may result in differences in the observed values for the same composition. Thus, depending upon manufacturing techniques, and with little regard to particle size, the properties of ceramic composition made using the proportions given in Examples 1-26, can vary from values given: for example the dielectric constants may vary by $\mp$ 1000, the dissipation factor may vary by $\mp$ 0.2 percent, and the capacitance change with temperature versus capacitance at 25°C may vary by $\mp$ 1.5 percent.

Details of preferred embodiments of the present invention are further described in the following non-limiting examples.

Examples 1-5

MgO and $Nb_2O_5$ with amount as shown in Table I were weighed and mixed with about 30cc of distilled water. The mixture was mixed thoroughly in a high speed Spex model 800-2 paint mixer manufactured by Spex Industries Inc., New Jersey for 10 minutes. The wet slurries were dried into a cake and ground and screened through a 30 mesh metal screen. The powder mixtures were then calcined from 950°C to 1050°C for 3 to 5 hours. The crystal structure of the calcined powder was analyzed by x-ray diffraction techniques. The results as shown in Table I indicated complete reaction and formation of $MgNb_2O_6$ with no excess $Nb_2O_5$ or MgO except for examples 4-5, which showed several unidentified phases. Examples, such as 1 and 5, which are outside the scope of this invention will be labeled with "*" hereafter. It is commonly known that MgO readily absorbs water or moisture to form $Mg(OH)_2$. Therefore, the nominal weight ratio of MgO and $Nb_2O_5$ where complete reactions and single phase $MgNb_2O_6$ are formed depends, to a large extent, on the actual water ignition loss of the MgO raw materials used. In actual manufacturing, MgO could be either hydrated to form $Mg(OH)_2$ or heat treated to vaporize water moisture prior to reacting with $Nb_2O_5$. In another approach, $MgCO_3$ is used as raw material.

15g of $Mg_{1/3}Nb_{2/3}O_2$ prepared in Examples 1 to 5 was mixed with 32.8g PbO in the same manner as described in Examples 1 to 5. The powder mixture us calcined from 700°C to 900°C for 4 hours. The crystal structure of the calcined powder us analyzed again by x-ray diffraction. Except for Example 1, which is outside the scope of this invention, the results as shown in Table I indicated complete reaction and formation of $Pb(Mg_{1/3}Nb_{2/3})O_3$. The crystal structure of Example 1 consists of approximately 80 weight percent of $Pb(Mg_{1/3}Nb_{2/3})O_3$ and 20 weight percent of $Pb_3Nb_4O_{13}$. The latter crystal phase, known as pyrochlore, is known to be detrimental to the dielectric properties of the ceramic compositions of this invention.

TABLE I

| Ex. | MgO(g) | $Nb_2O_5$(g) | MgO/$Nb_2O_5$ | Crystal structure | Crystal structure after reaction with PbO |
|---|---|---|---|---|---|
| *1 | 5.93 | 39.07 | 0.152 | $Mg_{1/3}Nb_{2/3}O_2$ | $Pb(Mg_{1/3}Nb_{2/3})O_2$ + $Pb_3Nb_4O_{13}$ |
| 2 | 6.52 | 39.07 | 0.167 | $Mg_{1/3}Nb_{2/3}O_2$ | $Pb(Mg_{1/3}Nb_{2/3})O_3$ |
| 3 | 7.11 | 39.07 | 0.182 | $Mg_{1/3}Nb_{2/3}O_2$ | $Pb(Mg_{1/3}Nb_{2/3})O_3$ |
| 4 | 7.71 | 39.07 | 0.197 | $Mg_{1/3}Nb_{2/3}O_2$ + unidentified phase | $Pb(Mg_{1/3}Nb_{2/3})O_3$ |
| *5 | 8.30 | 39.07 | 0.212 | $Mg_{1/3}Nb_{2/3}O_2$ + unidentified phase | $Pb(Mg_{1/3}Nb_{2/3})O_3$ |

EXAMPLES 6-14

About 614 grams of $Mg_{1/3}Nb_{2/3}O_2$ were prepared by wet mixing 93 grams of MgO, 521 grams of $Nb_2O_5$, with 900 cc of distilled water for about 2 hours. The wet slurry was dried into cake, pulverized, and calcined at 1050°C for 4 hours. 188.3 grams of such powder was added with 411.8 grams of PbO, 7 grams of DAVAN "C" [1] dispersing agent into a rubber lined mill jar with a zirconia media. The slurry was milled for 16 hours, dried and pulverized again. The powder mixture was then calcined at about 860°C for 5 hours to form $Pb(Mg_{1/3}Nb_{2/3})O_3$. The calcined powder was then pulverized, and about 570 grams of such powder was added with 370 cc of distilled water, 5.5 grams of DAVAN "C" dispersing agent into a rubber lined mill jar with a zirconia media. The slurry was milled until the powder average particle size is less than 1.2 um,

1 DAVAN C is a alkali ion free aqeous dispersing agent comprising a mixture of polyelectrolytes, ammonia and sulfur available from W.P. VAnderbilt Co., Conn.

and then dried and pulverized again to provide the base ceramic composition. According to composition data shown in Table II, 0.3 grams to 4.1 grams of PbO were added to 30 grams or 20 grams of the above ceramic base composition, with 10 cc to 15 cc distilled water. The slurry was mixed thoroughly in a high speed Spex paint mixer for 10 minutes. The resultant slurry was then dried into a cake and ground with a mortar and pestle. 2.4cc or 1.5cc of a binder solution including 26 weight percent water, 26 weight percent propylene glycol and 48 weight percent corn syrup was mixed into the ceramic powder in a mortar and pestle which was then granulated through a 40 mesh nylon screen. Discs of the resultant mixture having a diameter of 1.27 cm and a thickness of 0.1 to 0.15 cm were prepared by a technique well known in the art, i.e., compression where the mixture is pressed at a pressure of 38,000 lbs. per square inch in a stainless steel die. The discs were placed on a stabilized zirconia setter and fired at temperatures of 900°C to 1000°C for 3 hours. After cooling, silver electrodes were painted on the discs which were then fired at 815°C to sinter on the electrodes. The capacitance (C), dissipation factor (DF), and capacitance change with temperature (TC) versus capacitance at 25°C were then measured with Model E SI2 110A capacitance bridge at 1 KHZ measurement frequency, from -55°C to +125°C at 10°C intervals. The dielectric constant of each sample was then calculated from the fundamental capacitance equation:

$$ K = 5.66 \times C \, \frac{1}{D2} \qquad C \, \frac{1}{D^2} $$

where

K = dielectric constant of the sample
l = thickness of the disc in inchs
D = diameter of the disc in inchs
C = capacitance of the disc in pico farads

TABLE II

| Example | Pb(Mg$_{1/3}$Nb$_{2/3}$)O$_3$ (g) | PbO (g) | Weight ratio PbO/Pb(Mg$_{1/3}$Nb$_{2/3}$)O$_3$ |
|---|---|---|---|
| *6 | 30 | 0.3 | 0.01 |
| 7 | 30 | 0.6 | 0.02 |
| 8 | 30 | 1.5 | 0.05 |
| 9 | 30 | 2.1 | 0.07 |
| 10 | 30 | 3.0 | 0.10 |
| 11 | 30 | 3.6 | 0.12 |
| 12 | 30 | 4.5 | 0.15 |
| 13 | 17.9 | 3.3 | 0.185 |
| *14 | 17.9 | 4.1 | 0.23 |

## TABLE III

### TC (%)

| Ex. | K at 25°C | DF at 25°C | -55°C | -30°C | 85°C | 125°C | K max. |
|-----|-----------|------------|-------|-------|------|-------|--------|
| *6 | does not sinter up to 1000°C | | | | | | |
| *7 | does not sinter up to 1000°C | | | | | | |
| 8 | 8490 | 0.20 | -60.7 | -31.4 | -48.5 | -69.8 | 11,380 at 0°C |
| 9 | 9180 | 0.35 | -56.3 | -31.0 | -46.8 | -68.2 | 13,480 at 0°C |
| 10 | 9030 | 0.34 | -59.2 | -31.0 | -46.9 | -68.2 | 12,300 at 0°C |
| 11 | 10510 | 0.24 | -63.3 | -34.9 | -51.0 | -71.2 | 13,670 at 0°C |
| 12 | 9950 | 0.20 | -62.9 | -35.0 | -50.4 | -70.6 | 13,350 at 0°C |
| 13 | 11600 | 0.10 | -65.8 | -32.1 | -55.3 | -74.2 | 15,200 at 0°C |
| 14 | 11000 | 0.17 | -65.5 | -32.4 | -54.3 | -73.7 | 14,000 at 0°C |

The dielectric properties of Examples 6 - 14 as summarized in Table III demonstrate that, when PbO is uniformly mixed with the $Pb(Mg_{1/3}Nb_{2/3})O_3$ base ceramic at weight ratio of at least about 0.05, the ceramic composition of this invention can be sintered at temperatures below 950°C in open air. The ceramic disc samples thus sintered have dielectric constants (K), higher than 8500 and dissipation factors (DF) less than 0.5%. When the PbO to $Pb(Mg_{1/3}Nb_{2/3})O_3$ weight ratio is less than about 0.05, such as in Examples 6 and 7, the ceramic compositions could not be sintered at temperatures below 1000°C. According to existing literature, ceramic compositions, such as Examples 6 and 7 would have to be sintered at much higher temperatures, e.g., higher than 1200°C in a Pb saturated environment to provide a useful ceramic.

When the PbO to $Pb(Mg_{1/3}Nb_{2/3})O_3$ weight ratio is higher than 0.19, such as Example 14, no further improvements of the dielectric properties could be seen. Excessive PbO in ceramic dielectric compositions usually leads to reduced long term reliability.

The dielectric properties of the ceramic disc compositions shown in Examples 8 to 13 demonstrate that they are suitable to be used as ceramic dielectric materials in manufacturing multilayer ceramic capacitors (MLC) with high volume density due to their high dielectric constant and low dissipation factor. These ceramic compositions may be used with lower cost electrode materials having high silver content, e.g., 80 Ag:20 Pd to 100 Ag due to their ability to be sintered at temperatures below 1000°C. Another advantage of these compositions include sintering in open air with a simple kiln arrangement.

### EXAMPLES 15-20

According to Table IV, $MgNb_2O_6$ and PbO were mixed, calcined, and milled to less than 1.2 $\mu$m average particle size, with the same technique as described in Examples 6 to 14, to prepare about 600 grams of $Pb(Mg_{1/3}Nb_{2/3})O_3$/PbO ceramic base composition. 520 grams of such base ceramic were then homogeneously mixed with 62.4 grams of PbO, i.e., 12 weight percent, in a water slurry, dried, and screened through a 40 mesh nylon screen. 500g of the resulting ceramic powder was then charged into a ball mill with 1.27 cm (1/2 inch) alumina media together with 240 grams of a binder solution made by uniformly mixing and dissolving 186 grams dioctylphthalate, 90 grams Nuostabe V-1444,[2] 597 ml ethanol

[2] Nuostable V-1444 is an alkali ion free organic solvent dispersing agent available from Nuodex Co. Inc., New Jersey.

and 270 ml toluene, and 372 grams Butvar B-76 [3] vinyl resin.

This slurry was milled for 16 hours, discharged and filtered through a 44 micron screen. This slurry having a viscosity of about 1500 to 3000 centipoise was then de-aired and cast, in accordance with standard techniques, into a tape with a thickness of 1.5 mils. The tape was converted into multilayer ceramic capacitors having either 70 percent silver 30 percent palladium or 100 percent silver electrodes via conventional processes well known in the industry. The capacitors were preheated to 260°C for 48 hours, placed on stabilized zirconia setters and sintered at 900°C to 960°C for 3 hours. The sintered capacitors had 10 active dielectric layers with dielectric thickness ranging from 0.85 to 1.10 mil. Termination electrodes or DuPont silver paint No. 4822, which is a mixture of silver and glass frit in a binder, were applied at opposite ends of the multilayer capacitor to connect alternate electrode layers and these capacitors were fired at 815°C in a tunnel furnace, the dielectric constant (K), dissipation factor (DF), insulation resistance (R) and capacitance (C) product (RC) at 25°C, 85°C, and 125°C, and capacitance change with temperature (TC) were measured with the same instruments described in Examples 6 - 14. The results are shown in Table V. The measurements were again performed from -55°C to 125°C in 10°C increments. The data in Tables IV and V demonstrate that the compositions of Examples 15 to 20 had dielectric constants exceeding 12,000 and also low dissipation factors DF and high RC products.

These compositions can be fired in an open air atmosphere at temperatures as low as 920°C permitting pure silver to be used for MLC electrodes.

TABLE IV

| Ex. | $MgNb_2O_6$ | PbO for $Pb(Mg_{1/3}Nb_{2/3})O_3$ | $PbO/Pb(Mg_{1/3}Nb_{2/3})O_3$ | PbO for sintering |
|---|---|---|---|---|
| 15 | 188.3 g | 411.8 g | 0.457 | 12 wt % |
| 16 | 188.3 g | 411.8 g ($Pb_3O_4$) | 0.457 | 12 wt% |
| 17 | 188.3 g | 411.8 g (Fumed lithage) | 0.456 | 12 wt % |
| 18 | 188.3 g | 432.3 g | 0.436 | 12 wt % |
| 19 | 188.3 g | 452.9 g | 0.416 | 12 wt % |
| 20 | 188.3 g | 473.5 g | 0.398 | 12 wt % |

[3] Butvar B-76 is a binder comprising a mixture of polyvinyl butyral, polyvinyl alcohol and polyvinyl acetate available from Monsanto Corp.

TABLE V (part I)

| Example | 15 | | 16 | 17 |
|---|---|---|---|---|
| Electrode | 70Ag/30Pd | 100 Ag | 70Ag/30Pd | 70Ag/30Pd |
| Dielectric Thickness | 1.18 mil | 1.18 mil | 1.01 mil | 1.06 mil |
| K at 25°C | 13,030 | 14,300 | 11,750 | 12,510 |
| DF at 25°C(%) | 0.19 | 0.26 | 0.21 | 0.23 |
| TC at -55°C (%) | -65.2 | -63.3 | -59.9 | -61.7 |
| -30°C(%) | -30.1 | -28.2 | -19.4 | -21.9 |
| 85°C (%) | -57.6 | -56.4 | -54.9 | -56.0 |
| 125°C (%) | -75.8 | -71.5 | -73.8 | -74.8 |
| K max. | 17,640 | 18,933 | 15,510 | 16,720 |
| Temp. of K max | 0°C | 0°C | 0°C | 0°C |
| RC at 100v/mil DC at 25°C | 58,850 | 10,676 | 49,530 | 46,760 |
| 85°C | 9,480 | 13,655 | 10,740 | 13,210 |
| 125°C | 1,040 | 925 | 2,430 | 816 |

TABLE V (part II)

| Example | 18 | 19 | 20 |
|---|---|---|---|
| Electrode trode | 70Ag/30Pd | 70Ag/30Pd | 70Ag/30Pd |
| Dielectric Thickness | 1.05 mil | 0.99 mil | 1.10 mil |
| K at 25°C (%) | 13,840 | 12,050 | 13,570 |
| DF at 25°C(%) | 0.24 | .20 | 0.28 |
| TC at -55°C (%) | -62.7 | -64.2 | -64.2 |
| -30°C(%) | -26.0 | -31.2 | -26.9 |
| 85°C (%) | -53.1 | -53.4 | -54.2 |
| 125°C (%) | -73.0 | -73.1 | -73.8 |
| K max. | 18,070 | 15,320 | 17,960 |
| Temp. of K max | 0°C | 0°C | 0°C |
| RC at 100v/mil DC at 25°C | 42,320 | 63,260 | 33,870 |
| 85°C | 2,860 | 4,910 | 4,034 |
| 125°C | 103 | 430 | 185 |

EXAMPLES 21-26

About 600 grams of base ceramic composition were prepared as follows $MgNb_2O_6$, PbO, $PbTiO_3$ and metallic silver were mixed, calcined, and milled to less than 1.2 um average particle size, with the same technique as described in Examples 6 to 14.

520 grams of the base ceramic were then homogenously mixed with 62.4 grams of PbO, i.e., about 12 weight percent in a water slurry, dried, and screened through a 40 mesh nylon screen. 500 grams of the above ceramic preparation were then used to fabricate MLC units with either 70% Ag/30% Pd or 100% Ag internal electrodes, using the same procedure as described in Examples 15 to 20. The compositions and dielectric properties of the prepared MLC units are summarized in Tables VI and VII. Examples 21 to 23 show that when $PbTiO_3$ is calcined into the ceramic base composition of $Pb(Mg_{1/3}Nb_{2/3})O_3$, the dielectric constant increases, as compared to Example 15, and the temperature where the maximum dielectric constant occurs, often described as "Curie Temperature" or "Relaxation Peak", shifts to higher temperatures. Thus the dielectric performance of the ceramic can be modified for specific MLC applications. However, when the $PbTiO_3$ to $Pb(Mg_{1/3}Nb_{2/3})O_3$ weight ratio is higher than 0.05 in the tested compositions, such as Example 23, the dissipation factor becomes higher than 3%.

It will also be seen from Examples 24 to 26 that when metallic silver is calcined into the ceramic base composition of $Pb(Mg_{1/3}Nb_{2/3})O_3$, the insulation resistance and therefore the RC product of the MLC capacitors are significantly increased as compared to Example 15. The same increase of the insulation resistance can also be seen when internal electrodes with higher silver contents are used, such as shown in Examples 15 and 21. However, when the weight ratio of Ag to $Pb(Mg_{1/3}Nb_{2/3})O_3$ is more than 0.01, such as Example 26, no further improvement is seen. Further inclusion of Ag in these compositions would merely increase the manufacturing cost of the ceramic dielectric composition.

Data from the composition and physical properties of Examples 15-20 are summarized in Tables VI and VII below.

TABLE VI

| Example | MgNb$_2$O$_6$ | PbO for Pb (Mg$_{1/3}$Nb$_{2/3}$)O$_3$ | PbTiO$_3$ | Ag | Pbo for sintering |
|---|---|---|---|---|---|
| 21 | 188.3 g | 411.8 g | 16.8 g | 0 g | 12 Wt % |
| 22 | 188.3 g | 411.8 g | 28.0 g | 0 g | 12 Wt % |
| *23 | 188.3 g | 411.8 g | 39.1 g | 0 g | 12 Wt % |
| 24 | 188.3 g | 411.8 g | 0 g | 1.5 g | 12 Wt % |
| 25 | 188.3 g | 411.8 g | 0 g | 3.0 g | 12 Wt % |
| 26 | 188.3 g | 411.8 g | 0 g | 6.0 g | 12 Wt % |

TABLE VII (part 1)

| Example | 21 | | 22 | 23 |
|---|---|---|---|---|
| Electrode | 70Ag/30Pd | 100 Ag | 70Ag/30Pd | 70Ag/30Pd |
| Dielectric Thickness | 0.92 mil | 0.92 mil | 1.10 mil | 0.86 mil |
| K at 25°C | 15,620 | 19,480 | 14,500 | 15,990 |
| DF at 25°C (%) | 2.35 | 1.51 | 2.70 | 9.04 |
| TC at -55°C (%) | -75.7 | -78.0 | -77.5 | -82.6 |
| -30°C (%) | -51.1 | -59.8 | -62.3 | -73.7 |
| 85°C (%) | -48.8 | -57.9 | -47.1 | -32.4 |
| 125°C (%) | -71.9 | -77.1 | -71.4 | -64.3 |
| K Max | 16,790 | 20,990 | 14,860 | 18,050 |
| Temp. of K max | 10°C | 10°C | 20°C | 35°C |

RC at 100V/mil DC
at 25°C    48,500    178,200    50,440    45,980
85°C    8,330    35,950    7,950    5,930
125°C    590    1,360    323    320

TABLE VII (part 2)

| Example | 24 | | 25 | 26 |
|---|---|---|---|---|
| Electrode | 70Ag/30Pd | 100 Ag | 70Ag/30Pd | 70Ag/30Pd |
| Dielectric Thickness | 0.88 mil | 0.88 mil | 0.95 mil | 1.00 mil |
| K at 25°C | 13,420 | 13,230 | 13,420 | 13,000 |
| DF at 25°C (%) | 0.48 | 0.24 | 0.35 | 0.33 |
| TC at −55°C (%) | −64.1 | −61.5 | −67.7 | −67.4 |
| −30°C (%) | −26.8 | −24.2 | −39.8 | −39.1 |
| 85°C (%) | −52.1 | −54.8 | −54.5 | −54.2 |
| 125°C (%) | −72.4 | −73.6 | −74.0 | −73.7 |
| K Max | 17,230 | 17,400 | 16,120 | 15,700 |
| Temp. of K max | 0°C | 0°C | 0°C | 0°C |
| RC at 100V/mil DC at 25°C | 29,640 | 102,970 | 71,468 | 56,240 |
| 85°C | 2,882 | 4,551 | 45,681 | 11,355 |
| 125°C | 190 | 380 | 606 | 81 |

## Claims

1. An ultra low temperature sinterable composition, comprising:
   81.5 - 95 wt% of a base ceramic comprising $Pb(Mg_{1/3}Nb_{2/3})O_3$ formed from a composition comprising $MgNb_2O_6$, lead oxide and lead titanate (or precursors thereof) and
   5 - 18.5 wt% lead oxide.

2. The composition of claim 1, wherein the $MgNb_2O_6$ is formed from magnesium oxide and niobium pentoxide (or precursors thereof).

3. The composition of either of claims 1 and 2 wherein the composition forming the base ceramic further comprises metallic silver or its oxide precursor.

4. The composition of claim 3, wherein:
   the base ceramic is formed from a composition comprising lead oxide from 65.0 to 71.6 wt%; magnesium oxide from 4.2 to 4.9 wt%; niobium pentoxide from 25.5 to 27.0 wt%; lead titanate up to 4.5 wt%; and silver up to 1 wt%.

5. The composition of any one of claims 1 to 3, wherein:
   the base ceramic comprises about 88 wt% of the composition and is formed from a mixture of about 65.56 wt% PbO; 4.62 wt% MgO; 25.36 wt% $Nb_2O_5$; and 4.46 wt% $PbTiO_3$.

6. A composition having a sintering temperature below 1000°C, for making ceramics having a dielectric constant above 12,000 at 1KHz, 1VRMS, a dissipation factor below 3%, an insulation capacitance product above 20,000 at 25°C and above 2,000 at 85°C, the composition comprising the sinterable composition according to any one of claims 1 to 5.

7. A method for making a ceramic composition having a sintering temperature below 1000°C, a dielectric constant above 12,000 at 1KHz, 1VRMS, a dissipation factor below 3%, an insulation capacitance

11

product above 20,000 at 25°C and above 2000 at 85°C, the method comprising the steps of:

mixing 81.5 - 95 wt% of a base ceramic comprising $Pb(Mg_{1/3}Nb_{2/3})O_3$ formed from a composition comprising $MgNb_2O_6$, lead oxide and lead titanate (or precursors thereof) with 5 - 18.5 wt% lead oxide.

8. The method for making a ceramic composition according to claim 7 wherein the composition forming the base ceramic further comprises metallic silver or its oxide precursor.

9. The method according to claim 7 or 8 wherein $MgNb_2O_6$ is formed by reacting magnesium oxide and niobium pentoxide.

10. The method recited in claim 9, wherein the base ceramic is formed from a composition comprising:

lead oxide from 65.0 to 71.6 wt%; magnesium oxide from 4.2 to 4.9 wt%; niobium pentoxide from 25.5 to 27.0 wt%; lead titanate up to 4.5% and silver up to about 1 wt%.

11. The method recited in claim 9, wherein the base ceramic comprises:

88 wt% of the ceramic composition and is formed from a mixture comprising about 65.56 wt% lead oxide; 4.62 wt% magnesium oxide; 25.36 wt% niobium pentoxide; and 4.46 wt% lead titanate.

12. A method for making a ceramic capacitor comprising:

a) forming a plurality of dielectric layers by mixing 81.5 - 95 wt% of a base ceramic comprising $Pb(Mg_{1/3}Nb_{2/3})O_3$ formed from a composition comprising $MgNb_2O_6$, lead oxide and lead titanate (or precursors thereof) and 5 - 18.5 wt% lead oxide;

b) compressing the mixture and firing it at a temperature less than about 1000°C; and

c) forming electrodes between the dielectric layers.

13. The method according to claim 12 wherein $MgNb_2O_6$ is formed by reacting magnesium oxide and niobium pentoxide.

14. The method for making ceramic capacitors according to any one of claims 12 and 13 wherein the composition forming the base ceramic further comprises metallic silver or its oxide precursor.

15. The method recited in claim 14 wherein the base ceramic is formed from a composition comprising:

lead oxide from 65.0 to 71.6 wt%; magnesium oxide from 4.2 to 4.9 wt%; niobium pentoxide from 25.5 to 27.0 wt%; lead titanate up to 4.5 wt%; and silver up to 1 wt%.

16. The method recited in claim 14 wherein the base ceramic comprises:

about 88 wt% of the ceramic composition and is formed from a mixture comprising about 65.56 wt% lead oxide; 4.62 wt% magnesium oxide; 25.36 wt% niobium pentoxide; and 4.46 wt% lead titanate.

17. A multilayer capacitor produced by the process of any one of claims 12 to 16.

**Revendications**

1. Composition pouvant être frittée à très basse température, comprenant :

81,5 à 95 % en poids d'une céramique de base constituée de $Pb(Mg_{1/3}Nb_{2/3})O_3$ formée à partir d'une composition comprenant du $MgNb_2O_6$, de l'oxyde de plomb et du titanate de plomb (ou des précurseurs de ceux-ci) ; et

5 à 18,5 % en poids d'oxyde de plomb.

2. Composition selon la revendication 1, dans laquelle le $MgNb_2O_6$ est formé à partir d'oxyde de magnésium et de pentoxyde de niobium (ou des précurseurs ceux-ci).

3. Composition selon l'une ou l'autre des revendications 1 et 2 dans laquelle la composition formant la céramique de base comprend en outre de l'argent métallique ou son oxyde précurseur.

4. Composition selon la revendication 3, dans laquelle :

la céramique de base est formée à partir d'une composition comprenant de l'oxyde de plomb pour 65,0 à 71,6 % en poids ; de l'oxyde de magnésium pour 4,2 à 4,9 % en poids ; du pentoxyde de niobium pour 25,5 à 27,0 % en poids ; du titanate de plomb jusqu'à 4,5 % en poids ; et de l'argent jusqu'à 1 % en poids.

5. Composition selon l'une quelconques revendications 1 à 3, dans laquelle :
la céramique de base constitue environ 88 % en poids de la composition et est formée d'un mélange d'environ : 65,56 % en poids de PbO ; 4,62 % en poids de MgO ; 25,36 % en poids de $Nb_2O_5$ ; et 4,46 % en poids de $PbTiO_3$.

6. Composition ayant une température de frittage située au-dessous de 1.000° C, pour la fabrication de céramiques ayant une constante diélectrique située au-dessus de 12.000 à 1 KHz et 1 Volt efficace, un facteur de dissipation inférieur à 3 %, un produit résistance capacité d'isolation supérieur à 20.000 à 25° C et supérieur à 2.000 à 85° C, la composition étant constituée de la composition pouvant être frittée telle que revendiquée par l'une quelconque des revendications 1 à 5.

7. Procédé de fabrication d'une composition céramique ayant une température de frittage inférieure à 1.000° C, une constante diélectrique supérieure à 12.0000 à 1KHz et 1 Volt efficace, un facteur de dissipation inférieur à 3 %, un produit résistance capacité d'isolation supérieur à 20.000 à 25° C et supérieur à 2.000 à 85° C, le procédé comprenant les étapes de :
mélangeage de 81,5 à 95 % en poids d'une céramique de base constituée de $Pb(Mg_{1/3}Nb_{2/3})O_3$ formée à partir d'une composition comprenant du $MgNb_2O_6$, de l'oxyde de plomb et du titanate de plomb (ou des précurseurs ceux-ci) avec 5 à 18,5 % en poids d'oxyde de plomb.

8. Procédé de fabrication d'une composition selon la revendication 7, dans laquelle la composition formant la céramique de base comprend en outre de l'argent métallique ou son précurseur oxyde.

9. Procédé selon la revendication 7 ou la revendication 8 dans lequel, le $MgNb_2O_6$ est formé à partir d'oxyde de magnésium et de pentoxyde de niobium.

10. Procédé selon la revendication 9, dans lequel la céramique de base est formée à partir d'une composition comprenant :
de l'oxyde de plomb pour 65,0 à 71,6 % en poids ; de l'oxyde de magnésium pour 4,2 à 4,9 % en poids ; du pentoxyde de niobium pour 25,5 à 27,0 % en poids ; du titanate de plomb jusqu'à 4,5 % en poids ; et de l'argent jusqu'à environ 1 % en poids.

11. Procédé selon la revendication 9, dans lequel
la céramique de base constitue :
88 % en poids de la composition céramique et est formée à partir d'un mélange comprenant environ 65,56 % en poids d'oxyde de plomb ; 4,62 % en poids d'oxyde de magnésium ; 25,36 % en poids de pentoxyde de niobium ; et 4,46 % en poids de titanate de plomb.

12. Procédé de fabrication d'un condensateur céramique comprenant :
a) la formation d'une pluralité de couches diélectriques en mélangeant 81,5 à 95 % en poids d'une céramique de base constituée de $Pb(Mg_{1/3}Nb_{2/3})O_3$ formée à partir d'une composition comprenant du $MgNb_2O_6$, de l'oxyde de plomb et du titanate de plomb (ou des précurseurs de ceux-ci) et 5 à 18,5 % en poids d'oxyde de plomb.
b) la compression du mélange et sa cuisson à une température inférieure à environ 1.000° C ; et
c) la formation d'électrodes entre les couches diélectriques.

13. Procédé selon la revendication 12, dans lequel le $MgNb_2O_6$ est formé à partir d'oxyde de magnésium et de pentoxyde de niobium.

14. Procédé de fabrication de condensateurs céramiques selon l'une quelconques revendications 12 et 13 dans laquelle la composition formant la céramique de base comprend en outre de l'argent métallique ou son précurseur oxyde.

15. Procédé selon la revendication 14, dans laquelle la céramique de base est formée à partir d'une composition comprenant de l'oxyde de plomb pour 65,0 à 71,6 % en poids ; de l'oxyde de magnésium pour 4,2 à 4,9 % en poids ; du pentoxyde de niobium pour 25,5 à 27,0 % en poids ; du titanate de plomb jusqu'à 4,5 % en poids ; et de l'argent jusqu'à 1 % en poids.

16. Procédé selon la revendication 14, dans lequel la céramique de base constitue environ 88 % en poids de la composition et est formée d'un mélange d'environ 65,56 % en poids d'oxyde de plomb ; 4,62 % en poids d'oxyde de magnésium ; 25,36 % en poids de pentoxyde de niobium ; et 4,46 % en poids de titanate de plomb.

17. Condensateur multicouche produit par le procédé de l'une quelconque des revendications 12 à 16.

**Patentansprüche**

1. Bei sehr niedriger Temperatur sinterfähige Zusammensetzung, die
   81,5 bis 95 Gew.-% einer Grundkeramik, die aus einer Zusammensetzung mit $MgNb_2O_6$, Bleioxid und Bleititanat (oder Vorläufern hiervon) gebildetes $Pb(Mg_{1/3}Nb_{2/3})O_3$ umfaßt, und
   5 bis 18,5 Gew.-% Bleioxid umfaßt.

2. Zusammensetzung nach Anspruch 1, worin das $MgNb_2O_6$ aus Magnesiumoxid und Niobpentoxid (oder Vorläufern hiervon) gebildet ist.

3. Zusammensetzung nach einem der Ansprüche 1 und 2, worin die die Grundkeramik bildende Zusammensetzung außerdem metallisches Silber oder dessen Oxidvorläufer umfaßt.

4. Zusammensetzung nach Anspruch 3, worin
   die Grundkeramik aus einer Zusammensetzung gebildet ist, die 65,0 bis 71,6 Gew.-% Bleioxid, 4,2 bis 4,9 Gew.-% Magnesiumoxid, 25,5 bis 27,0 Gew.-% Niobpentoxid, bis zu 4,5 Gew.-% Bleititanat und bis zu 1 Gew.-% Silber umfaßt.

5. Zusammensetzung nach einem der Ansprüche 1 bis 3, worin
   die Grundkeramik etwa 88 Gew.-% der Zusammensetzung umfaßt und aus einem Gemisch von etwa 65,56 Gew.-% PbO, 4,62 Gew.-% MgO, 25,36 Gew.-% $Nb_2O_5$ und 4,46 Gew.-% $PbTiO_3$ gebildet ist.

6. Zusammensetzung mit einer Sintertemperatur unterhalb 1000°C zur Herstellung von Keramik mit einer dielektrischen Konstante oberhalb 12.000 bei 1 KHz, 1VRMS, einem Verlustfaktor unterhalb 3 %, einem Isolationskapazitanzprodukt oberhalb 20.000 bei 25°C und oberhalb 2.000 bei 85°C, wobei die Zusammensetzung die sinterfähige Zusammensetzung nach einem der Ansprüche 1 bis 5 umfaßt.

7. Verfahren zur Herstellung einer Keramikzusammensetzung mit einer Sintertemperatur unterhalb 1000°C, einer dielektrischen Konstante oberhalb 12.000 bei 1 KHz, 1VRMS, einem Verlustfaktor unter 3 %, einem Isolationskapazitanzprodukt oberhalb 20.000 bei 25°C und oberhalb 2.000 bei 85°C, wobei das Verfahren die Stufen umfaßt, in denen man
   81,5 bis 95 Gew.-% einer Grundkeramik, die $Pb(Mg_{1/3}Nb_{2/3})O_3$ umfaßt, welche aus einer Zusammensetzung gebildet ist, die $MgNb_2O_6$, Bleioxid und Bleititanat (oder Vorläufer hiervon) umfaßt, mit 5 bis 18,5 Gew.-% Bleioxid vermischt.

8. Verfahren zur Herstellung einer Keramikzusammensetzung nach Anspruch 7, bei dem die die Grundkeramik bildende Zusammensetzung außerdem metallisches Silber oder dessen Oxidvorläufer umfaßt.

9. Verfahren nach Anspruch 7 oder 8, bei dem $MgNb_2O_6$ durch Umsetzung von Magnesiumoxid und Niobpentoxid gebildet ist.

10. Verfahren nach Anspruch 9, bei dem die Grundkeramik aus einer Zusammensetzung gebildet ist, die
    65,0 bis 71,6 Gew.-% Bleioxid, 4,2 bis 4,9 Gew.-% Magnesiumoxid, 25,5 bis 27,0 Gew.-% Niobpentoxid, bis zu 4,5 % Bleititanat und bis zu etwa 1 Gew.-% Silber umfaßt.

11. Verfahren nach Anspruch 9, bei dem die Grundkeramik 88 Gew.-% der Keramikzusammensetzung umfaßt und aus einem Gemisch gebildet ist, das etwa 65,56 Gew.-% Bleioxid, 4,62 Gew.-% Magnesiumoxid, 25,36 Gew.-% Niobpentoxid und 4,46 Gew.-% Bleititanat umfaßt.

12. Verfahren zur Herstellung eines keramischen Kondensators, bei dem man

a) mehrere dielektrische Schichten bildet, indem man 81,5 bis 95 Gew.-% einer Grundkeramik, die $Pb(Mg_{1/3}Nb_{2/3})O_3$ umfaßt, welches aus einer $MgNb_2O_6$ Bleioxid und Bleititanat (oder Vorläufern) hiervon umfassenden Zusammensetzung gebildet wird, und 5 bis 18,5 Gew.-% Bleioxid miteinander vermischt,

b) das Gemisch komprimiert und es auf eine Temperatur von weniger als etwa 1000°C erhitzt und

c) Elektroden zwischen den dielektrischen Schichten bildet.

13. Verfahren nach Anspruch 12, bei dem $MgNb_2O_6$ durch Umsetzung von Magnesiumoxid und Niobpentoxid gebildet wird.

14. Verfahren zur Herstellung von keramischen Kondensatoren nach einem der Ansprüche 12 und 13, bei dem die die Grundkeramik bildende Zusammensetzung zusätzlich metallisches Silber oder dessen Oxidvorläufer umfaßt.

15. Verfahren nach Anspruch 14, bei dem die Grundkeramik aus einer Zusammensetzung gebildet ist, die 65,0 bis 71,6 Gew.-% Bleioxid, 4,2 bis 4,9 Gew.-% Magnesiumoxid, 25,5 bis 27,0 Gew.-% Niobpentoxid, bis zu 4,5 Gew.-% Bleititanat und bis zu 1 Gew.-% Silber umfaßt.

16. Verfahren nach Anspruch 14, bei dem die Grundkeramik etwa 88 Gew.-% der keramischen Zusammensetzung umfaßt und von einem Gemisch gebildet ist, das etwa 65,56 Gew.-% Bleioxid, 4,62 Gew.-% Magnesiumoxid, 25,36 Gew.-% Niobpentoxid und 4,46 Gew.-% Bleititanat umfaßt.

17. Mehrschichtiger Kondensator, der nach dem Verfahren nach einem der Ansprüche 12 bis 16 hergestellt wurde.